# EUROPÄISCHE PATENTSCHRIFT

(11) **EP 0 504 496 B1**
(45) Veröffentlichungstag und Bekanntmachung des Hinweises auf die Patenterteilung: **23.08.1995**
(21) Anmeldenummer: 91122246.1
(22) Anmeldetag: 27.12.1991
(51) Int. Cl.: E04F 19/04, E04F 19/08, E04F 17/08, H02G 3/04, F16L 3/22

(54) **Installationskanal für Versorgungsleitungen**
Installation channel for supply lines
Canal d'installation pour lignes de distribution

(30) Priorität: 18.03.1991 DE 9103263 U
(43) Veröffentlichungstag der Anmeldung: 23.09.1992
(73) Patentinhaber: Hewing GmbH, D-48607 Ochtrup (DE)
(72) Erfinder: Hansen, Jörg, W-4441 Wettringen (DE)
(74) Vertreter: Hilleringmann, Jochen, Dipl.-Ing.

(56) Entgegenhaltungen:
- DE-A- 1 659 425
- DE-A- 1 784 762
- DE-U- 7 701 540
- GB-A- 1 215 441

## Beschreibung

Die Erfindung betrifft einen Installationskanal für Versorgungsleitungen, insbesondere für Rohre, Kabel und dgl., nach dem Oberbegriff des Anspruchs 1.

Bei einem bekannten Installationskanal dieser Art (GB-A-1 215 441) ist das untere Verbindungsmittel als Raste und das obere Verbindungsmittel als Verriegelung ausgebildet, die ein Widerlager an der Halteleiste in Gestalt einer vertikalen, oberseitig offenen Nut aufweist sowie eine in diese einhängbare, wandparallele Riegelzunge an der Abdeckleiste umfaßt.

Bei einem anderen bekannten Installationskanal (DE-A-1 659 425) sind gleichartige obere und untere Verbindungsmittel vorgesehen. Die Abdeckleiste weist einen oberen und unteren zur Wandseite hin abgewinkelten Verbindungsschenkel mit einer Abkantung auf, die jeweils einen hakenförmig gekrümmten Klemmsteg der Halteleiste hintergreift.

Der Erfindung liegt die Aufgabe zugrunde, einen Installationskanal der eingangs genannten Art zu schaffen, der auch bei dünnwandiger Ausführung formstabil, optisch ansehnlich und dabei bedienungsfreundlich ist.

Die Erfindung löst diese Aufgabe durch einen Installationskanal mit den Merkmalen des Anspruchs 1. Hinsichtlich wesentlicher weiterer Ausgestaltungen wird auf die Ansprüche 2 bis 13 verwiesen.

Bei dem Installationskanal nach der Erfindung ist die Abdeckleiste über ein gelenkförmiges unteres Verbindungsmittel sicher in ihrer Verbindungsstellung gehalten, in der sie vorzugsweise unter leichter Vorspannung an einer oder mehreren Auflagen der Trägerwände der Halteleiste anliegt. Über das als Kreisringprofil ausgebildete Widerlager kann die Abdeckleiste in die Verbindungsstellung eingeschwenkt werden.

Hinsichtlich wesentlicher weiterer Vorteile und Einzelheiten der Erfindung wird auf die nachfolgende Beschreibung und die Zeichnung verwiesen, in der ein Ausführungsbeispiel des Gegenstandes der Erfindung schematisch näher veranschaulicht ist. In der Zeichnung zeigen:
- Fig. 1: eine perspektivische, teilweise geschnittene Darstellung des erfindungsgemäßen Installationskanal mit zwei Versorgungsleitungen,
- Fig. 2: eine Schnittdarstellung des Installationskanals gemäß Fig. 1,
- Fig. 3: einen Schnitt durch eine abgewandelte Abdeckleiste in Einzeldarstellung, die Teil einer zweiten Installationskanalführung bildet, und
- Fig. 4: einen Schnitt durch eine abgewandelte Halteleiste der zweiten Installationskanalausführung, ebenfalls in Einzeldarstellung.

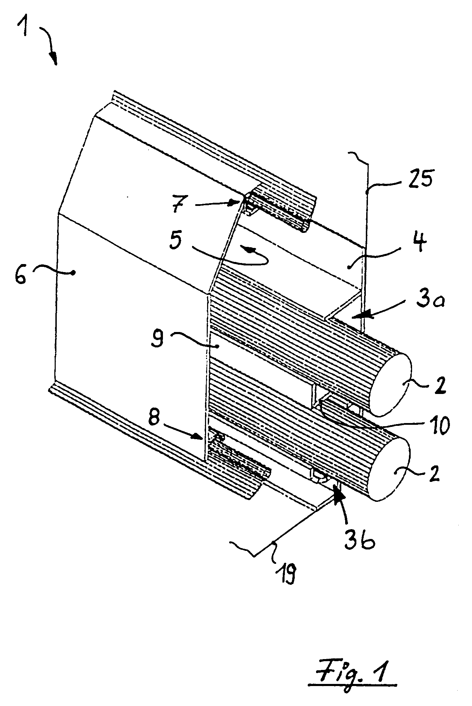

Die Fig. 1 zeigt einen als Ganzes mit 1 bezeichneten Installationskanal, der aus einer Halteleiste 4 und einer Abdeckleiste 6 besteht und bei dem dargestellten Beispiel zwei Versorgungsleitungen 2 in rinnenförmigen Kanälen 3a,3b der Halteleiste 4 aufnimmt. Halteleiste 4 und Abdeckleiste 6 umgrenzen einen Verlegekanal 5. Die Abdeckleiste 6 ist mit einem oberen Verbindungsmittel 7 und einem unteren Verbindungsmittel 8 mit der Halteleiste 4 verbunden und liegt dabei an einer Auflage 9 einer mittleren Trägerwand 10 der Halteleiste 4 vorzugsweise unter leichter Vorspannung an.

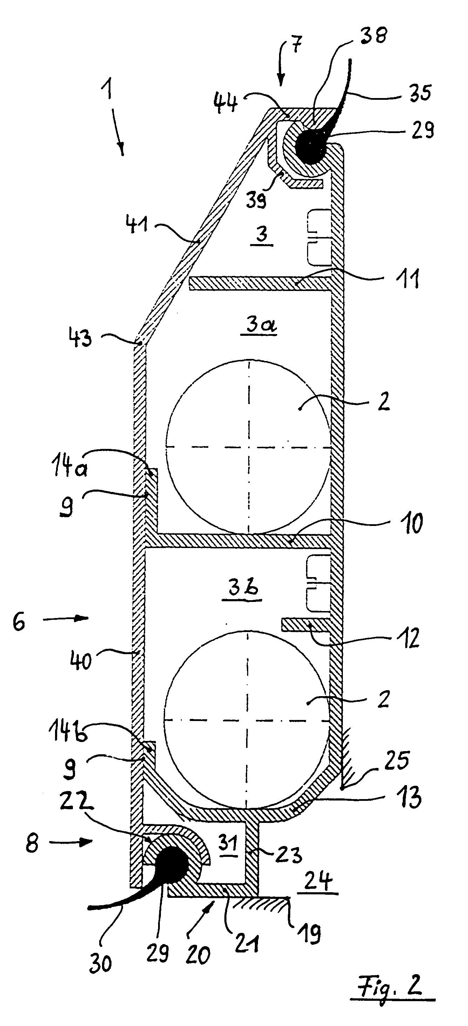

Der in Fig. 2 in Schnittdarstellung näher veranschaulichte Installationskanal 1 weist mehrere Trägerwände 10,11,12,13 auf, von denen die mittlere Trägerwand 10 und die untere Trägerwand 13 einen Randsteg 14a,14b darbieten, dessen Außenseite die Auflage 9 für die Abdeckleiste 6 bildet. Bei dem dargestellten Ausführungsbeispiel bietet die Auflage 9 an der Außenseite der Randstege 14 eine Dichtfläche dar, die mit der ihr gegenüberliegenden Fläche der Abdeckleiste 6 eine Spaltdichtung bildet.

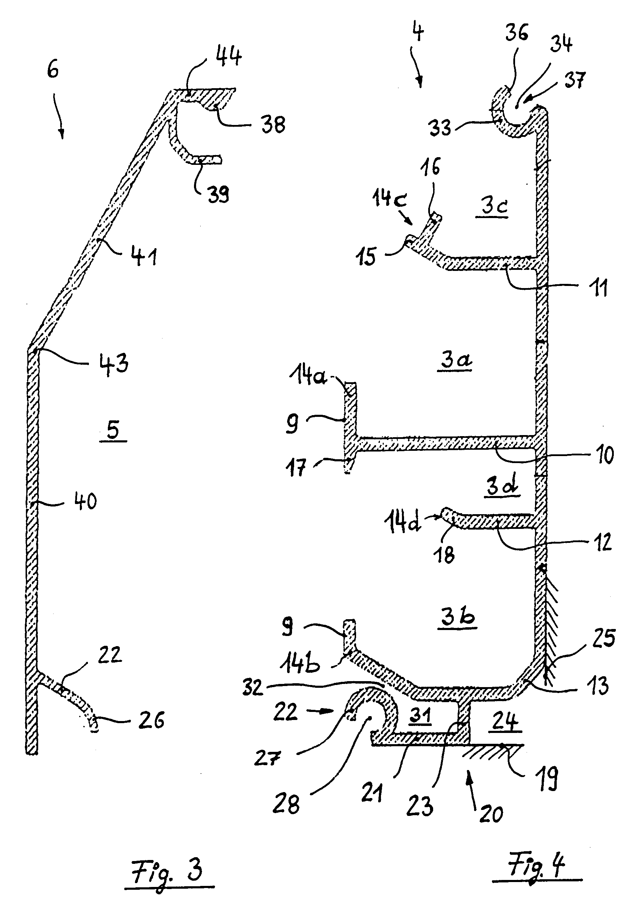

Fig. 3 und Fig. 4 zeigen eine zweite, bezvorzugte Ausführungsform eines Installationskanals nach der Erfindung mit einer Abdeckleiste 6 und einer Halteleiste 4, die sehr unterschiedlich gestaltete Trägerwände 10,11,12,13 für die Aufnahme von nicht dargestellten unterschiedlichen Versorgungsleitungen in besonderen, in Breite und Höhe voneinander abweichenden Kanälen 3a,3b,3c und 3d darbietet. Die Trägerwände 10,11,12,13 weisen dabei aufgekantete, unterschiedliche Randstege 14a,14b,14c und 14d auf.

Die obere Trägerwand 11 weist als Randsteg 14c zweckmäßig einen senkrecht zur Abdeckleiste 6 ausgerichteten Stützteil 15 auf, mit dem eine zusätzliche Anlage für die Abdeckleiste 6 geschaffen ist, und umfaßt im Bereich des Stützteils 15 einen hakenförmigen Anlageteil 16 auf, mit dem die Versorgungsleitungen 2 in ihrer Betriebsstellung im Kanal 3 gesichert sind.

Die mittlere Trägerwand 10 weist am Randsteg 14a einen nach unten vorstehenden Schenkel 17 (Fig. 4) auf, der gegebenfalls eine Abtropfkante bildet, so daß eine darunterliegende, gegenüber der mittleren Trägerwand 10 verkürzte Trägerwand 12 zur Bildung eines Kanals 3d, zum Beispiel für elektrische Kabel, vor Nässe geschützt ist. Der Randsteg 14d der Trägerwand 12 ist dabei als flacher Formbogen 18 ausgebildet.

Der aufgekantete Randsteg 14b der unteren Trägerwand 13 ist in der dargestellten Ausführungsform gemäß Fig. 4 ebenfalls als Auflage 9, gegebenenfalls mit Richtfunktion für die Abdeckleiste 6 ausgebildet, wobei die Trägerwände 10 und 13 gleichweit von der Halteleiste 4 vorstehen.

Im Bereich der unteren Trägerwand 13 der Halteleiste 4 ist bei beiden Ausführungsformen ein L-förmiger, zum Boden 19 vorstehender Stützsteg 20 angeordnet, an dessen bodenparallelen Schenkel 21 im vorderen Bereich ein Widerlager 22 des unteren Verbindungsmittels 8 ausgebildet ist. In vorteilhafter Ausführung ist der senkrechte Schenkel 23 des Stützsteges 20 mittig unterhalb der unteren Trägerwand 13 angeordnet. Damit wird ein Montagefreiraum 24 gebildet, der gegebenenfalls vorhandene Unebenheiten ausgleichen kann.

Das am bodenparallelen Schenkel 21 des Stützsteges 20 ausgebildete Widerlager 22 ist oberseitig von einer zumindest bereichsweise konformen Riegelzunge 26 (Fig. 3) der Abdeckleiste 6 umfaßbar. Das Widerlager 22 ist dabei vorteilhaft als ein Hohlprofilsteg 27 ausgebildet, der in Betriebsstellung des Installationskanal 1 einen bodenseitig offenen Klemmraum 28 für die Aufnahme eines Wulstes 29 einer Dichtlippe 30 aufweist (Fig. 2). Der Hohlprofilsteg 27 hat dabei zweckmäßig ein Kreisringprofil.

Das Widerlager 22 ist in der Ausführungsform gemäß Fig. 2 bzw. 4 über eine entsprechende Länge des Schenkels 23 des Stützsteges 20 soweit zur unteren Trägerwand 13 beabstandet, daß ein in einem Aufnahmeraum 31 mündender Durchgangsspalt 32 verbleibt, den die Riegelzunge 26 entweder mit Spiel (Fig. 2) oder annähernd spielfrei durchgreift.

Das obere Verbindungsmittel 7 ist von einem oberen Hohlprofilsteg 33 an der Halteleiste 4 gebildet, der in Betriebsstellung einen nach oben geöffneten Klemmraum 34 für die Aufnahme des Wulstes 29 einer oberen Dichtlippe 35 aufweist. Ein Rand 36 des Öffnungsschlitzes 37 (Fig. 4) des Klemmraumes 34 bildet ein Rastwiderlager für einen wulstförmigen Rastansatz 38 an der Abdeckleiste 6. Zweckmäßig hat der obere Hohlprofilsteg 33 ein Kreisringprofil, das von einem Führungssteg 39 der Abdeckleiste 6 untergriffen ist.

Über das obere und das untere Verbindungsmittel 7, 8 ist damit die Abdeckleiste 6 (Fig. 3) insgesamt so mit der Halteleiste 4 verbindbar, daß die Abdeckleiste 6 an den jeweiligen Auflagen 9 der Halteleiste 4 gegebenenfalls unter leichter, aus einer geringfügigen Verformung resultierenden Vorspannung anliegt. Die Abdeckleiste 6 liegt dabei mit einem unteren, wandparallelen Wandteil 40 an den Auflagen 9 an und umfaßt ein pultförmig schräg gestelltes oberes Wandteil 41, das sich über das obere Drittel bis die obere Hälfte der Gesamthöhe der Abdeckleiste 6 erstreckt.

Statt dessen kann einer der Randstege 14 einer Trägerwand auch im Übergangsbereich 43 (Fig. 3) vom unteren Wandteil 40 zum oberen wandteil 41 an der Abdeckleiste 6 anliegen und dabei eine an den Übergangsbereich 43 formlich angepaßte Auflage bilden.

Dem oberen Abschluß der Abdeckleiste 6 bildet ein zur Anlagefläche 25 der Halteleiste 4 senkrecht ausgerichteter oberer Abschlußwandteil 44, an dem sich unterseitig der wulstförmige Rastansatz 38 befindet.

## Patentansprüche

1. Installationskanal für Versorgungsleitungen, insbesondere für Rohre, Kabel und dgl., der mit einer wandseitigen Halteleiste (4) sowie einer daran befestigbaren Abdeckleiste (6) einen am Umfang geschlossenen Verlegekanal (5) bildet, wobei zur Verbindung der Halte- und der Abdeckleiste (4,6) obere und untere Verbindungsmittel (7,8) vorgesehen sind, von denen das eine als Raste und das andere als eine Verriegelung ausgebildet ist, die ein Widerlager (22) an der Halteleiste (4) sowie eine von oben hinter dieses einhängbare Riegelzunge (26) an der Abdeckleiste (6) umfaßt, und die Halteleiste (4) vorderseitig angeformte Trägerwände (10,11,12,13) aufweist, die mit Randstegen (14a,14b,14c,14d) rinnenförmige Kanäle (3a,3b,3c,3d) unterschiedlicher Abmessung für unterschiedliche Arten von Versorgungsleitungen (2) bilden, wobei zumindest ein Randsteg (14a) an seiner Außenseite als Auflage (9) für die Abdeckleiste (6) ausgebildet ist und die Verbindungsmittel (7,8) der Abdeckleiste (6) eine Verbindungsstellung vorgeben, in der die Abdeckleiste (6) an der Auflage (9) anliegt, **dadurch gekennzeichnet,** daß die Verriegelung das untere Verbindungsmittel bildet, das Widerlager (22) der Verriegelung als kreisringförmiger Profilsteg (27) ausgebildet ist und die Riegelzunge (26) einen mit dem kreisringförmigen Profilsteg (27) konformen Bereich aufweist, mit dem sie das Widerlager (22) oberseitig umfaßt.

2. Installationskanal nach Anspruch 1, dadurch gekennzeichnet, daß das Widerlager (22) im vorderen Bereich eines bodenparallelen Schenkels (21) eines L-förmigen, zum Boden (19) vorstehenden Stützsteges (20) an der unteren Trägerwand (13) der Halteleiste (4) ausgebildet ist.

3. Installationskanal nach Anspruch 2, dadurch gekennzeichnet, daß der senkrechte Schenkel (23) des Stützsteges (20) mittig unterhalb der unteren Trägerwand (13) angeordnet ist und vorderseitig einen rückwärtigen Montagefreiraum (24) begrenzt.

4. Installationskanal nach einem der Ansprüche 1 bis 3, dadurch gekennzeichnet, daß der Hohlprofilsteg (27) einen bodenseitig offenen Klemmraum (28) für die Aufnahme des Wulstes (29) einer unteren Dichtlippe (30) umgrenzt.

5. Installationskanal nach einem der Ansprüche 1 bis 4, dadurch gekennzeichnet, daß zwischen dem Hohlprofilsteg (27) und der unteren Trägerwand (13) ein in einen Aufnahmeraum (31) mündender Durchgangsspalt (32) gebildet ist.

6. Installationskanal nach einem der Ansprüche 1 bis 5, dadurch gekennzeichnet, daß das obere Verbindungsmittel (7) einen oberen Hohlprofilsteg (33) an der Halteleiste (4) mit einem in Verbindungsstellung nach oben offenen Klemmraum (34) für die Aufnahme des Wulstes (29) einer oberen Dichtlippe (35) umfaßt.

7. Installationskanal nach Anspruch 6, dadurch gekennzeichnet, daß der Rand (36) des Öffnungsschlitzes (37) des Klemmraumes (34) ein Rastwiderlager für einen wulstförmigen Rastansatz (38) an der Abdeckleiste (6) bildet.

8. Installationskanal nach Anspruch 6 oder 7, dadurch gekennzeichnet, daß der obere Hohlprofilsteg (33) ein Kreisringprofil hat und von einem Führungssteg (39) der Abdeckleiste (6) untergriffen ist.

9. Installationskanal nach einem der Ansprüche 1 bis 8, dadurch gekennzeichnet, daß die Abdeckleiste (6) einen zur Halteleiste (4) parallelen unteren Wandteil (40) und einen pultförmig schräggestellten oberen Wandteil (41) umfaßt.

10. Installationskanal nach Anspruch 9, dadurch gekennzeichnet, daß im Übergangsbereich (43) vom unteren zum oberen Wandteil (40,41) eine formlich angepaßte Auflage (9) eines Randsteges der Halteleiste (4) anliegt.

11. Installationskanal nach Anspruch 9 oder 10, dadurch gekennzeichnet, daß der obere Wandteil (40) sich über einen Bereich erstreckt, der das obere Drittel bis die obere Hälfte der Höhe der Abeckleiste (6) einnimmt.

12. Installationskanal nach einem der Ansprüche 9 bis 11, dadurch gekennzeichnet, daß der wulstförmige Rastansatz (38) an der Unterseite eines senkrecht zur Anlagefläche (25) der Halteleiste (4) ausgerichteten oberen Abschlußwandteiles (44) angeformt ist.

13. Installationskanal nach einem der Ansprüche 1 bis 12, dadurch gekennzeichnet, daß der Randsteg (14c) einer oberen Trägerwand (11) ein senkrecht zur Abdeckleiste (6) ausgerichtetes Stützteil (15) und ein die Versorgungsleitungen (2) sicherndes Anlageteil (16) umfaßt.

14. Installationskanal nach einem der Ansprüche 1 bis 13, dadurch gekennzeichnet, daß eine zwischenliegende, gegenüber der sie übergreifenden mittleren Trägerwand (10) verkürzte Trägerwand (12) vorgesehen und deren Randsteg (14d) als flacher Formbogen (18) ausgebildet ist.

## Claims

1. An installation duct for supply lines, particularly for tubes, cables and the like which, together with a supporting strip (4) on the wall side and a covering strip (6) adapted to be fixed thereto, constitutes a peripherally closed installation duct (5), whereby in order to connect the supporting strip and the covering strip (4, 6), upper and lower connecting means (7, 8) are provided one of which is constructed as a catch while the other is constructed as a locking device which comprises an abutment (22) on the supporting strip (4) and a locking tongue (26) on the covering strip (6), adapted to be hung behind the abutment from above, the supporting strip (4) having integrally formed on the front carrier walls (10, 11, 12, 13) which, with marginal webs (14a, 14b, 14c, 14d), form channel-like passages (3a, 3b, 3c, 3d) of different sizes for different types of supply lines (2), whereby at least one marginal web (14a) is on its outside face constructed as a support (9) for the covering strip (6) and the connecting means (7, 8) of the covering strip (6) predetermine a connection position in which the covering strip (6) bears on the support (9), characterised in that the locking device constitutes the lower connecting means, the abutment (22) of the locking device is constructed as a circular profiled web (27) and the locking tongue (26) has a part which conforms to the circular profiled web (27), by which it surrounds the top of the abutment (22).

2. An installation duct according to claim 1, characterised in that the abutment (22) is constructed in the front part of an arm (21) of an L-shaped bracing web (20) parallel with and projecting towards the bottom (19) and which is disposed on the bottom carrier wall (13) of the supporting strip (4).

3. An installation duct according to claim 2, characterised in that the perpendicular arm (23) of the bracing web (20) is disposed centrally below the bottom carrier wall (13) and at the front it defines a rear, clear installation space (24).

4. An installation duct according to one of claims 1 to 3, characterised in that the hollow profiled web (27) defines an open-bottomed clamping space (28) for accommodating the bead (29) of a bottom sealing lip (30).

5. An installation duct according to one of claims 1 to 4, characterised in that between the hollow profiled web (27) and the bottom carrier wall (13) there is a through gap (32) which opens out into a receiving space (31).

6. An installation duct according to one of claims 1 to 5, characterised in that the upper connecting means (7) comprises an upper hollow profiled web (33) on a supporting strip (4) with a clamping space (34) which in the connection position is opened at the top and which is intended to receive the bead (29) of an upper sealing lip (35).

7. An installation duct according to claim 6, characterised in that the edge (36) of the open slot (37) of the clamping space (34) forms a catch abutment for a bead-like catch projection (38) on the covering strip (6).

8. An installation duct according to claim 6 or 7, characterised in that the upper hollow profiled web (33) has a circular profile and a guide web (39) on the covering strip (6) engages under it.

9. An installation duct according to one of claims 1 to 8, characterised in that the covering strip (6) comprises, parallel with the supporting strip (4), a lower wall part (40) and an upper wall part (41) which is inclined in the same way as a lectern.

10. An installation duct according to claim 9, characterised in that an appropriately shaped bearing surface (9) of a marginal web on the supporting strip (4) bears on the transition zone (43) between the bottom and top wall part (40, 41).

11. An installation duct according to claim 9 or 10, characterised in that the upper wall part (40) extends over an area which occupies the upper third to as much as the upper half of the height of the covering strip (6).

12. An installation duct according to one of claims 9 to 11, characterised in that the bead-like catch projection (38) is integrally formed on the under side of an upper closure wall part (44) which is aligned at a right-angle to the bearing surface (25) of the supporting strip (4).

13. An installation duct according to one of claims 1 to 12, characterised in that the marginal web (14c) of an upper carrier wall (11) comprises a bracing part (15) orientated at right-angles to the covering strip (6) and a bearing part (16) which secures the supply lines (2).

14. An installation duct according to one of claims 1 to 13, characterised in that an intermediate carrier wall (12) is provided which is shortened in respect of the middle carrier wall (10) engaging over it, its marginal web (14d) being constructed as a flat shaped curve (18).

## Revendications

1. Canal d'installation pour lignes de distribution, en particulier pour des tubes, câbles et articles analogues, qui, avec une réglette de support (4) du côté de la paroi et une réglette de couverture (6) qui peut y être fixée, forme un canal de pose (5) fermé sur son pourtour, où pour relier les réglettes de support et de couverture (4, 6) sont prévus des moyens de liaison (7, 8) supérieur et inférieur, dont l'un a la forme d'un dispositif d'encliquetage et l'autre a la forme d'un dispositif de verrouillage, qui comprend une butée (22) sur la réglette de support (4), ainsi qu'une languette de verrouillage (26) qui peut être accrochée d'en haut derrière celle-ci sur la réglette de couverture (6), et où la réglette de support (4) présente à l'avant des parois porteuses (10, 11, 12, 13) venues d'une pièce, qui forment, par des nervures marginales (14a, 14b, 14c, 14d), des canaux (3a, 3b, 3c, 3d) en forme de rigole de différentes dimensions pour différents types de lignes de distribution (2), où au moins une nervure marginale (14a) est conçue pour former par sa face extérieure un appui (9) pour la réglette de couverture (6) et les moyens de liaison (7, 8) de la réglette de couverture (6) prédéfinissent une position d'assemblage, dans laquelle la réglette de couverture (6) se trouve contre l'appui (9), caractérisé en ce que le dispositif de verrouillage forme le moyen de liaison inférieur, la butée (22) du dispositif de verrouillage ayant la forme d'un profilé en anneau de cercle (27) et la languette de verrouillage (26) présentant une zone se conformant au profité en anneau de cercle (27), par laquelle elle enveloppe la butée (22) par le haut.

2. Canal d'installation suivant la revendication 1, caractérisé en ce que la butée (22) est formée dans la zone antérieure d'une aile (21) parallèle au fond d'une nervure de support (20) en forme de L qui fait saillie sur le fond (19), sur la paroi porteuse (13) de la réglette de support (4).

3. Canal d'installation suivant la revendication 2, caractérisé en ce que l'aile verticale (23) de la nervure de support (20) est agencée au milieu sous la paroi porteuse (13) inférieure et délimite par l'avant un espace libre de montage arrière (24).

4. Canal d'installation suivant l'une quelconque des revendications 1 à 3, caractérisé en ce que le profilé creux (27) délimite un espace de serrage (28) ouvert au fond pour recevoir le bourrelet (29) d'une lèvre d'étanchéité inférieure (30).

5. Canal d'installation suivant l'une quelconque des revendications 1 à 4, caractérisé en ce qu'entre le profilé creux (27) et la paroi porteuse inférieure (13), est formée une fente de passage (32) débouchant dans un espace de logement (31).

6. Canal d'installation suivant l'une quelconque des revendications 1 à 5, caractérisé en ce que le moyen de liaison supérieur (7) comprend un profilé creux supérieur (33) sur la réglette de support (4) qui, dans la position d'assemblage, présente un espace de serrage (34) ouvert vers le haut pour recevoir le bourrelet (29) d'une lèvre d'étanchéité supérieure (35).

7. Canal d'installation suivant la revendication 6, caractérisé en ce que le bord (36) de la fente d'ouverture (37) de l'espace de serrage (34) forme une butée d'encliquetage pour un bourrelet d'encliquetage (38) sur la réglette de couverture (6).

8. Canal d'installation suivant la revendication 6 ou 7, caractérisé en ce que le profité creux supérieur (33) présente un profil en anneau de cercle et se trouve au-dessus d'une nervure de guidage (39) de la régtette de couverture (6).

9. Canal d'installation suivant l'une quelconque des revendications 1 à 8, caractérisé en ce que la réglette de couverture (6) comprend une partie de paroi inférieure (40) parallèle à la réglette de support (4) et une partie de paroi supérieure (41) inclinée en forme de pupitre.

10. Canal d'installation suivant la revendication 9, caractérisé en ce que, dans la zone de transition (43) entre les parties de paroi inférieure et supérieure (40, 41) s'appuie un support (9) de forme adaptée d'une nervure de la réglette de support (4).

11. Canal d'installation suivant la revendication 9 ou 10, caractérisé en ce que la partie de paroi supérieure (40) s'étend sur une zone qui occupe le tiers supérieur à la moitié supérieure de la hauteur de la nervure de couverture (6).

12. Canal d'installation suivant l'une quelconque des revendications 9 à 11, caractérisé en ce que le bourrelet d'encliquetage (38) est venu d'une pièce avec la face inférieure d'une partie de paroi de fermeture supérieure (44), perpendiculaire à la face d'appui (25) de la réglette de support (4).

13. Canal d'installation suivant l'une quelconque des revendications 1 à 12, caractérisé en ce que la nervure marginale (14c) d'une paroi porteuse supérieure (11) comporte une partie de support (15) perpendiculaire à la réglette de couverture (6) et une partie d'appui (16) qui protège les lignes de distribution (2).

14. Canal d'installation suivant l'une quelconque des revendications 1 à 13, caractérisé en ce qu'est prévue une paroi porteuse (12) intermédiaire qui est plus courte que la paroi porteuse médiane (10) qui la surplombe et dont la nervure marginale (14d) a la forme d'un profilé coudé plat (18).
